# EUROPÄISCHE PATENTSCHRIFT

(11) **EP 3 385 514 B1**
(45) Veröffentlichungstag und Bekanntmachung des Hinweises auf die Patenterteilung: **22.09.2021**
(21) Anmeldenummer: 18155040.1
(22) Anmeldetag: 05.02.2018
(51) Int. Cl.: F01M 13/04, B01D 45/14, B04B 9/04

(54) **TELLERSEPARATOR**
DISC SEPARATOR
SÉPARATEUR À DISQUES

(30) Priorität: 06.04.2017 DE 102017205852
(43) Veröffentlichungstag der Anmeldung: 10.10.2018
(73) Patentinhaber: AUDI AG, 85045 Ingolstadt (DE)
(72) Erfinder: Richter, Swen, 91795 Dollnstein (DE)

(56) Entgegenhaltungen:
- EP-A2- 2 020 485
- DE-A1- 10 300 976
- DE-A1- 10 338 770
- US-A1- 2009 186 752

## Beschreibung

Die Erfindung betrifft einen Tellerseparator zum Abscheiden eines Stoffs aus einem Stoffgemisch mit den Merkmalen des Oberbegriffs des Anspruchs 1.

Tellerseparatoren werden häufig als Ölabscheider eingesetzt, beispielsweise zur Ölabscheidung aus Blowby-Gasen, welche insbesondere aus einem Brennraum einer Brennkraftmaschine in ein Kurbelgehäuse der Brennkraftmaschine eindringen. Zum Antrieb derartiger Tellerseparatoren werden insbesondere Elektromotoren verwendet. Typischerweise weisen derartige Tellerseparatoren weiterhin eine Abscheidereinrichtung mit mehreren rotierbaren Tellerelementen auf. Für den Antrieb und die Abscheidereinrichtung eines Tellerseparators der angesprochenen Art ist ein relativ großer Bauraumbedarf erforderlich. Zudem ist für den Antrieb und die Abscheidereinrichtung jeweils eine separate Lagerung erforderlich, wodurch entsprechende Kosten anfallen.

Aus dem Stand der Technik ist beispielsweise die Druckschrift DE 10 2009 036 476 A1 bekannt. Diese betrifft einen Zentrifugalabscheider zum Abscheiden von Ölnebel aus dem Kurbelgehäuseentlüftungsgas einer Brennkraftmaschine oder zum Abscheiden von festen Verunreinigungen aus dem Schmieröl einer Brennkraftmaschine, wobei der Zentrifugalabscheider einen drehantreibbaren Rotor, ein rotoraufnehmendes Gehäuse und einen Drehantrieb für den Rotor aufweist, wobei der Drehantrieb durch einen Elektromotor gebildet ist, der im Gehäuse angeordnet ist. Dabei sind Mittel zum Kühlen des Elektromotors vorgesehen.

Der Erfindung liegt die Aufgabe zugrunde, einen Tellerseparator zu schaffen, welcher gegenüber bekannten Tellerseparatoren Vorteile aufweist, insbesondere einen kleineren Bauraum benötigt und zudem eine Lagerung mit weniger Lagerstellen aufweist, wodurch sich Kosteneinsparungen ergeben.

Die Aufgabe wird gelöst, indem der Tellerseparator gemäß Anspruch 1 geschaffen wird. Vorteilhafte Ausgestaltungen ergeben sich aus den Unteransprüchen.

Gemäß der Erfindung ist vorgesehen, dass der Rotor mittels einer Lagerwelle, welche den Stator zumindest teilweise in axialer Richtung durchgreift, drehbar gelagert ist. Grundsätzlich wird ein Tellerseparator zum Abscheiden eines Stoffs aus einem Stoffgemisch mit einer Abscheidereinrichtung und einem Elektromotor zum rotatorischen Antreiben der Abscheidereinrichtung geschaffen. Die Abscheidereinrichtung ist dabei drehfest mit dem Elektromotor gekoppelt. Es ist vorgesehen, dass der Elektromotor als Außenläufer ausgestaltet ist und einen in radialer Richtung bezüglich einer Drehachse des Elektromotors innenliegenden Stator und einen außenliegenden Rotor aufweist. Die Abscheidereinrichtung ist hierbei an dem Rotor befestigt und erstreckt sich ausgehend von dem Rotor in radialer Richtung nach außen. Der Stator ist dabei in axialer Richtung bezüglich der Drehachse gesehen wenigstens teilweise in Überdeckung mit der Abscheidereinrichtung angeordnet.

Der Tellerseparator weist zahlreiche Vorteile gegenüber dem Stand der Technik auf. Dadurch, dass der Stator in axialer Richtung bezüglich der Drehachse gesehen wenigstens teilweise in Überdeckung mit der Abscheidereinrichtung angeordnet ist, kann ein erforderlicher Bauraumbedarf für den Tellerseparator reduziert werden. Insbesondere ergibt sich gegenüber bekannten Tellerseparatoren, bei welchen die Abscheidereinrichtung und der Antrieb zueinander axial versetzt und/oder beabstandet sind, eine Verringerung des erforderlichen Bauraums in axialer Richtung. Darüber hinaus kann auf jeweils separate Lagerungen für eine Welle der Abscheidereinrichtung und eine Antriebswelle des Elektromotors verzichtet werden. Da die Welle der Abscheidereinrichtung und die Antriebswelle des Elektromotors bei dem erfindungsgemäßen Tellerseparator insbesondere integral ausgebildet sind, kann eine Lagerung mit im Vergleich zu bekannten Tellerseparatoren weniger Lagerstellen vorgesehen werden, wodurch sich Kosteneinsparungen und ein verringerter Bauraumbedarf ergeben.

Bei einer bevorzugten Ausführungsform ist der Tellerseparator als Ölabscheider ausgebildet. Vorzugsweise ist der Tellerabscheider eingerichtet zum Abscheiden von Öl aus einem ölhaltigen Stoffgemisch. Vorzugsweise handelt es sich bei dem ölhaltigen Stoffgemisch um Blowby-Gas, welches insbesondere aus einem Brennraum einer Brennkraftmaschine in ein Kurbelgehäuse derselben eindringt. Gemäß dem Funktionsprinzip bekannter Tellerseparatoren wird durch das rotatorische Antreiben der Abscheidereinrichtung und dadurch erzeugter Zentrifugalkräfte der Stoff aus dem Stoffgemisch abgeschieden. Insbesondere ist es mittels des Tellerseparators möglich, verschiedene Phasen des Stoffgemischs mit jeweils unterschiedlichen Dichten voneinander zu trennen.

Der Rotor weist vorzugsweise eine zylindrisch ausgebildete äußere Mantelfläche und eine Innenseite auf. Mit der Innenseite wirkt der Rotor gemäß dem Funktionsprinzip bekannter Elektromotoren mit dem Stator zusammen. Vorzugsweise ist der Rotor glockenförmig ausgebildet, wobei er den Stator gemäß dem Aufbau bekannter Außenläufermotoren axial und in Umfangsrichtung des Stators zumindest teilweise übergreift. Somit dient der Rotor insbesondere als Welle der Abscheidereinrichtung und als Antriebswelle des Elektromotors.

Die Abscheidereinrichtung ist an dem Rotor insbesondere derart befestigt, dass diese unter Berücksichtigung der Kräfte und Beschleunigungen bei einem bestimmungsgemäßen Betrieb des Tellerseparators sicher gehalten wird.

Eine Weiterbildung der Erfindung sieht vor, dass die Abscheidereinrichtung mehrere koaxial zueinander angeordnete Tellerelemente aufweist. Vorzugsweise sind die mehreren Tellerelemente in axialer Richtung gleichmäßig voneinander beabstandet angeordnet. Besonders bevorzugt sind die mehreren Tellerelemente jeweils im Wesentlichen gleichförmig ausgebildet. Bei einer bevorzugten Ausführungsform des Tellerseparators sind die mehreren Tellerelemente miteinander einstückig ausgebildet. Durch diese Ausgestaltung kann eine technologisch reife und kostengünstige Ausführung des Tellerseparators realisiert werden.

Gemäß einer Weiterbildung der Erfindung sind die mehreren Tellerelemente jeweils ringförmig ausgebildet, wobei diese - im Schnitt gesehen - jeweils ein in radialer Richtung innenliegendes erstes Ende und ein in radialer Richtung außenliegendes zweites Ende aufweisen. Vorzugsweise sind die mehreren Tellerelemente jeweils an dem ersten Ende an dem Rotor drehfest angeordnet. Vorzugsweise sind die mehreren Tellerelemente konzentrisch zu dem Rotor angeordnet. Vorzugsweise umgreifen die mehreren Tellerelemente jeweils den Rotor in einer Umfangsrichtung desselben. Vorzugsweise sind die mehreren Tellerelemente jeweils form-, kraft- und/oder stoffschlüssig an dem Rotor befestigt, insbesondere permanent und/oder starr. Weiterhin sind die mehreren Tellerelemente vorzugsweise jeweils in axialer Richtung fest, insbesondere permanent und/oder starr an dem Rotor angeordnet. Durch diese Ausbildung der Abscheidereinrichtung wird eine einfache und kostengünstige Realisierung des Tellerseparators ermöglicht.

Eine Weiterbildung der Erfindung sieht vor, dass das erste Ende zumindest eines der mehreren Tellerelemente innerhalb eines Bereichs der Drehachse, über welchen sich der Stator axial erstreckt, in Querrichtung zu der Drehachse angeordnet ist. Besonders bevorzugt sind die mehreren Tellerelemente mehrheitlich derart angeordnet, dass deren erste Enden jeweils innerhalb des Bereichs der Drehachse, über welchen sich der Stator axial erstreckt, in Querrichtung zu der Drehachse angeordnet sind. Auf diese Weise wird insbesondere eine möglichst große Überdeckung der Abscheidereinrichtung mit dem Stator in axialer Richtung bezüglich der Drehachse realisiert. Dadurch kann eine - insbesondere in axialer Richtung gesehen - besonders kompakte Ausbildung des Tellerseparators realisiert werden.

Gemäß einer Weiterbildung der Erfindung weisen die mehreren Tellerelemente jeweils einen ersten Ringbereich auf, der sich ausgehend von dem ersten Ende radial in Richtung des zweiten Endes erstreckt. Insbesondere verläuft ein radial außen liegender Endbereich des ersten Ringbereichs konzentrisch bezüglich der Drehachse. Vorzugsweise sind die mehreren Tellerelemente in dem ersten Ringbereich im Wesentlichen eben ausgebildet und senkrecht zu der Drehachse angeordnet. Durch diese Ausbildung kann in vorteilhafter Weise eine besonders effektive Abscheidewirkung des Tellerseparators insbesondere durch eine hohe Beschleunigung des Stoffgemischs realisiert werden.

Eine Weiterbildung der Erfindung sieht vor, dass das Stoffgemisch den mehreren Tellerelementen im Bereich des ersten Ringbereichs zuführbar ist. Besonders bevorzugt ist das Stoffgemisch den mehreren Tellerelementen über mindestens einen im Bereich des ersten Ringbereichs angeordneten Zuführpfad zuführbar, welcher insbesondere in axialer Richtung verläuft. Vorzugsweise verläuft der mindestens eine Zuführpfad, insbesondere bezüglich der Drehachse, helix- oder spiralförmig um die äußere Mantelfläche des Rotors herum. Bevorzugt verläuft der mindestens eine Zuführpfad durch mehrere axiale Durchbrüche und/oder Ausnehmungen in beziehungsweise an den mehreren Tellerelementen in dem ersten Ringbereich, wobei das Stoffgemisch in axialer Richtung durch die mehreren Tellerelemente hindurch und/oder an den mehreren Tellerelementen vorbeigeführt wird, insbesondere wenn sich die Abscheidereinrichtung im Betrieb dreht.

Von dem mindestens einen Zuführpfad wird das Stoffgemisch insbesondere den jeweiligen Tellerelementen zugeführt, so dass das Stoffgemisch zwischen und/oder auf diesen radial nach außen geleitet werden kann. Aufgrund der Zentrifugalkräfte wird das Stoffgemisch ausgehend von dem mindestens einen Zuführpfad in radialer Richtung - gemäß dem Funktionsprinzip bekannter Tellerseparatoren - beschleunigt und zwischen den mehreren Tellerelementen hindurchgeführt, wobei die Abscheidung des Stoffs aus dem Stoffgemisch bewirkt wird. Insbesondere ist es dabei nicht erforderlich, Kanäle, Ausnehmungen oder ähnliches in dem Rotor selbst vorzusehen, wodurch eine besonders kostengünstige Ausführung des Tellerseparators möglich ist.

Gemäß einer Weiterbildung der Erfindung ist vorgesehen, dass die mehreren Tellerelemente jeweils einen zweiten Ringbereich aufweisen, der sich jeweils an den ersten Ringbereich anschließt und sich bis zu dem zweiten Ende erstreckt. Das zweite Ende verläuft vorzugsweise konzentrisch zu der Drehachse. Vorzugsweise sind die mehreren Tellerelemente in dem zweiten Ringbereich im Wesentlichen kegelabschnittsförmig ausgebildet und schließen mit der Drehachse einen Winkel von kleiner als 90° und größer als 0° ein. Dabei ist es möglich, dass die mehreren Tellerelemente jeweils mit dem zweiten Ende gegenüber dem ersten Ende in eine erste axiale Richtung oder in eine der ersten axialen Richtung entgegengesetzte zweite axiale Richtung weisen. Vorzugsweise sind die mehreren Tellerelemente jeweils in dem ersten Ringbereich und dem zweiten Ringbereich einstückig miteinander ausgebildet. Auf diese Weise können die mehreren Tellerelemente kostengünstig insbesondere mittels eines geeigneten umformenden oder urformenden Fertigungsverfahrens hergestellt werden. Besonders bevorzugt schließen die mehreren Tellerelemente in dem zweiten Ringbereich jeweils mit der Drehachse einen Winkel von mindestens 30° bis höchstens 60°, besonders bevorzugt von 45° ein. Besonders bevorzugt schließen die mehreren Tellerelemente in dem zweiten Ringbereich jeweils den gleichen Winkel mit der Drehachse ein. Durch diese Ausgestaltung kann eine besonders effektive Abscheidewirkung des Tellerseparators sichergestellt werden.

Gemäß einer Weiterbildung der Erfindung ist vorgesehen, dass die mehreren Tellerelemente mit dem Rotor einstückig ausgebildet sind. Auf diese Weise kann zum einen eine besonders stabile Befestigung der mehreren Tellerelemente mit dem Rotor realisiert werden. Zum anderen lassen sich durch eine integrale Ausbildung der mehreren Tellerelemente und des Rotors die Kosten für deren Herstellung reduzieren.

Die Erfindung sieht vor, dass der Rotor mittels einer Lagerwelle, welche den Stator zumindest teilweise in axialer Richtung durchgreift, drehbar gelagert ist. Vorzugsweise ist der Rotor mit der Lagerwelle insbesondere über einen an dem Rotor und/oder der Lagerwelle angeordneten Verbindungsabschnitt fest verbunden, insbesondere permanent und/oder starr. Besonders bevorzugt sind der Rotor und die Lagerwelle insbesondere einschließlich des Verbindungsabschnitts einstückig miteinander ausgebildet. Auf diese Weise kann eine besonders kompakte Bauweise des Tellerseparators und eine einfache Lagerung verwirklicht werden.

Eine Weiterbildung der Erfindung sieht vor, dass der Tellerseparator ein Gehäuse aufweist, welches mit dem Stator fest, insbesondere permanent und/oder starr, verbunden ist. Durch diese Ausgestaltung ist es in vorteilhafter Weise möglich, die Abscheidereinrichtung und den Elektromotor als Modul auszugestalten, wobei dieses Modul mit verschieden ausgebildeten Gehäusen kombiniert und demnach in verschiedenen Anwendungen zum Einsatz kommen kann, wodurch Kostensynergien realisierbar sind.

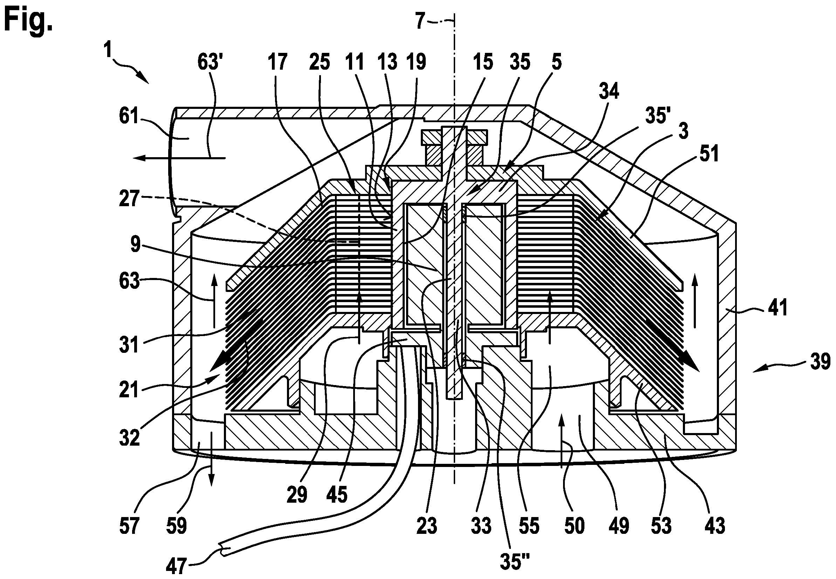

Die Erfindung wird im Folgenden anhand der Zeichnung näher erläutert, ohne dass eine Beschränkung der Erfindung erfolgt. Dabei zeigt die einzige
- Figur: eine schematische Darstellung eines Ausführungsbeispiels des Tellerseparators in einem Längsschnitt.

Die einzige Figur zeigt einen Tellerseparator 1 zum Abscheiden eines Stoffs aus einem Stoffgemisch. Vorzugsweise ist der Tellerseparator 1 als Ölabscheider zum Abscheiden von Öl aus Blowby-Gas ausgebildet. Der Tellerseparator 1 weist eine Abscheidereinrichtung 3 und einen Elektromotor 5 zum rotatorischen Antreiben der Abscheidereinrichtung 3 auf. Die Abscheidereinrichtung 3 ist drehfest mit dem Elektromotor 5 gekoppelt. Der Elektromotor 5 ist als Außenläufer ausgestaltet und weist einen in radialer Richtung bezüglich einer Drehachse 7 des Elektromotors 5 innenliegenden Stator 9 und einen außenliegenden Rotor 11 auf.

Der Rotor 11 weist hier eine im Wesentlichen zylindrisch ausgebildete äußere Mantelfläche 13 auf. Weiterhin weist der Rotor 11 hier eine Innenseite 15 auf, welche mit dem Stator 9 gemäß dem Funktionsprinzip bekannter Elektromotoren zusammenwirkt.

Die Abscheidereinrichtung 3 ist an dem Rotor 11 befestigt und erstreckt sich ausgehend von dem Rotor 11 in radialer Richtung nach außen. Der Stator 9 ist in axialer Richtung bezüglich der Drehachse 7 gesehen wenigstens teilweise in Überdeckung mit der Abscheidereinrichtung 3.

Die Abscheidereinrichtung 3 weist mehrere koaxial zueinander angeordnete Tellerelemente 17 auf, wobei der Übersichtlichkeit wegen nur ein Tellerelement 17 mit einem Bezugszeichen versehen ist. Die mehreren Tellerelemente 17 sind hier im Wesentlichen gleichförmig ausgebildet und axial gleichmäßig voneinander beabstandet.

Der Rotor 11 dient hier somit als Welle der Abscheidereinrichtung 3 und als Antriebswelle des Elektromotors 5. Hierdurch ergibt sich eine - in axialer Richtung gesehen - besonders kompakte Ausbildung des Tellerseparators 1.

Mittels des Elektromotors 5 kann die Abscheidereinrichtung 3 um die Drehachse 7 gedreht werden, wodurch - gemäß dem Funktionsprinzip bekannter Tellerseparatoren - mittels entstehender Zentrifugalkräfte ein Abscheiden des Stoffs aus dem der Abscheidereinrichtung 3 zugeführten Stoffgemisch bewirkt wird.

Die mehreren Tellerelemente 17 sind jeweils ringförmig bezüglich einer Mittelachse oder der Drehachse 7 ausgebildet, wobei sie - im Längsschnitt bezüglich dieser Achse gesehen - jeweils ein in radialer Richtung innenliegendes erstes Ende 19 und ein in radialer Richtung außenliegendes zweites Ende 21 aufweisen. Die mehreren Tellerelemente 17 sind jeweils an dem ersten Ende 19 an dem Rotor 11, insbesondere an der äußeren Mantelfläche 13 desselben, drehfest angeordnet. Zudem sind vorzugsweise die mehreren Tellerelemente 17 jeweils an dem ersten Ende 19 auch bezüglich ihrer axialen Position fest an dem Rotor 11 angeordnet.

Das erste Ende 19 zumindest eines der mehreren Tellerelemente 17 ist vorzugsweise innerhalb eines Bereichs 23 der Drehachse 7, über welchen sich der Stator 9 axial erstreckt, in Querrichtung zu der Drehachse 7 angeordnet. Bei dem in der Figur dargestellten Ausführungsbeispiel ist das erste Ende 19 eines Großteils der mehreren Tellerelemente 17 innerhalb des Bereichs 23 der Drehachse 7, über welchen sich der Stator 9 axial erstreckt, in Querrichtung zu der Drehachse 7 angeordnet. Es ergibt sich somit eine besonders große Überdeckung der Abscheidereinrichtung 3 mit dem Stator 9 in axialer Richtung. Hierdurch kann eine - insbesondere in axialer Richtung gesehen - besonders kompakte Bauweise des Tellerseparators 1 realisiert werden.

Die mehreren Tellerelemente 17 weisen jeweils einen ersten Ringbereich 25 auf, der sich ausgehend von dem ersten Ende 19 radial in Richtung des zweiten Endes 21 erstreckt. Die mehreren Tellerelemente 17 sind in dem ersten Ringbereich 25 im Wesentlichen eben ausgebildet und senkrecht zu der Drehachse 7 angeordnet.

Das Stoffgemisch ist den mehreren Tellerelementen 17 im Bereich des ersten Ringbereichs 25 zuführbar. Bei dem hier gezeigten Ausführungsbeispiel wird das Stoffgemisch entlang eines im Wesentlichen quer zu dem ersten Ringbereich 25 in axialer Richtung verlaufenden mindestens einen Zuführpfads 27 zugeführt, wobei eine bevorzugte Fließrichtung des Stoffgemischs schematisch mit einem Pfeil 29 gekennzeichnet ist. Der mindestens eine Zuführpfad 27 ist hier radial nach außen von der äußeren Mantelfläche 13 des Rotors 11 beabstandet und führt insbesondere durch jeweils in den mehreren Tellerelementen 17 vorgesehene Durchbrüche.

Die mehreren Tellerelemente 17 weisen jeweils einen zweiten Ringbereich 31 auf, der sich jeweils an den ersten Ringbereich 25 anschließt und sich bis zu dem zweiten Ende 21 erstreckt. Die mehreren Tellerelemente 17 sind in dem zweiten Ringbereich 31 im Wesentlichen kegelabschnittsförmig ausgebildet und schließen mit der Drehachse 7 einen Winkel von vorzugsweise kleiner als 90° und größer als 0°, hier von etwa 45°, ein. Bei dem hier dargestellten Ausführungsbeispiel sind die mehreren Tellerelemente 17 in dem zweiten Ringbereich 31 gegenüber dem ersten Ringbereich 25 jeweils - aus Sicht eines Betrachters gesehen - nach unten abgeknickt. Bei einem alternativen - hier nicht dargestellten Ausführungsbeispiel - sind die mehreren Tellerelemente 17 in dem zweiten Ringbereich 31 gegenüber dem ersten Ringbereich 25 - aus Sicht des Betrachter gesehen - nach oben abgeknickt.

Vorzugsweise sind die mehreren Tellerelemente 17 mit dem Rotor 11 einstückig ausgebildet.

Das Stoffgemisch wird aufgrund der Zentrifugalkräfte insbesondere von dem mindestens einen Zuführpfad 27 radial nach außen zwischen den mehreren Tellerelementen 17 hindurchgeführt, wobei ein Abscheiden des Stoffs aus dem Stoffgemisch bewirkt wird. Ein Fluss des Stoffgemischs ist hier schematisch mittels eines Pfeils 32 dargestellt.

Der Rotor 11 ist mittels einer Lagerwelle 33, welche den Stator 9 zumindest teilweise in axialer Richtung durchgreift, drehbar gelagert. Hier ist der Rotor 11 mit der Lagerwelle 33 einstückig ausgebildet, wobei der Rotor 11 über einen scheibenförmigen Verbindungsabschnitt 34 mit der Lagerwelle 33 einstückig verbunden ist. Bei dem hier dargestellten Ausführungsbeispiel ist eine Lagerung 35 vorgesehen, welche eine erste Lagerstelle 35' und eine zweite Lagerstelle 35" aufweist. Die Lagerung 35 kann also in vorteilhafter Weise zur Lagerung einer Welle der Abscheidereinrichtung 3 und einer Antriebswelle des Elektromotors 5 realisiert werden, da es sich bei der Welle der Abscheidereinrichtung 3 und der Antriebswelle des Elektromotors 5 um das gleiche Bauteil, nämlich insbesondere den Rotor 11 handelt. Auf diese Weise kann der Tellerseparator 1 besonders kostengünstig ausgestaltet werden.

Bei dem hier dargestellten Ausführungsbeispiel sind der Rotor 11, der Verbindungsabschnitt 34 und die Lagerwelle 33 einstückig miteinander ausgebildet. Bei einem alternativen Ausführungsbeispiel, welches hier nicht dargestellt ist, sind der Rotor 11, insbesondere ein im Wesentlichen zylindrischer, durch die äußere Mantelfläche 13 und die Innenseite 15 begrenzter Körper, und/oder der Verbindungsabschnitt 34 und/oder die Lagerwelle 33 als separate Bauteile ausgebildet. Hier wird jedoch eine einstückige Ausbildung dieser Bauteile gezeigt, da auf diese Weise der Tellerseparator 1 zu besonders günstigen Kosten herstellbar ist.

Weiterhin weist der Tellerseparator 1 ein Gehäuse 39 auf, welches mit dem Stator 9 fest verbunden ist. Das Gehäuse 39 weist hier ein Oberteil 41 und ein Basisteil 43 auf. Bei dem hier gezeigten Ausführungsbeispiel weist der Stator 9 einen Halteabschnitt 45 auf, mittels welchem der Stator 9 fest mit dem Basisteil 43 verbunden ist.

Durch das Basisteil 43 kann ein Anschlusskabel 47 zur Versorgung des Elektromotors 5 mit elektrischer Energie hindurchgeführt werden. Weiterhin weist das Basisteil 43 einen Eintritt 49 auf, durch welchen das Stoffgemisch der Abscheidereinrichtung 3 entlang einer schematisch mit einem Pfeil 50 gekennzeichneten Richtung zugeführt werden kann.

Die Abscheidereinrichtung 3 weist hier eine obere Abdeckung 51 und eine untere Abdeckung 53 auf, wobei die mehreren Tellerelemente 17 zwischen der oberen Abdeckung 51 und der unteren Abdeckung 53 angeordnet sind. Die obere Abdeckung 51 deckt die mehreren Tellerelemente 17 - aus Sicht des Betrachters gesehen - oben ab. Die obere Abdeckung 51 ist hier mit dem Rotor 11 drehfest gekoppelt. Die untere Abdeckung 53 deckt die mehreren Tellerelemente 17 - aus Sicht des Betrachters gesehen - unten ab. Die untere Abdeckung 53 ist vorzugsweise drehfest mit dem Rotor gekoppelt. Die obere Abdeckung 51 und die untere Abdeckung 53 überdecken in radialer Richtung die mehreren Tellerelemente 17 von dem ersten Ende 19 derselben bis zu dem zweiten Ende 21 derselben.

Das Basisteil 43 und die untere Abdeckung 53 bilden einen Hohlraum 55 aus, in welchen der Eintritt 49 mündet und welcher mit dem mindestens einen Zuführpfad 27 fluidverbunden ist. Das über den Eintritt 49 dem Tellerseparator 1 zugeführte Stoffgemisch kann also von dem Hohlraum 55 über den mindestens einen Zuführpfad 27 der Abscheidereinrichtung 3 zugeführt werden. Im Betrieb, mithin bei einer Rotation der Abscheidereinrichtung 3, insbesondere der mehreren Tellerelemente 17, wird das Stoffgemisch dann von dem mindestens einen Zuführpfad 27 zwischen den mehreren Tellerelementen 17 hindurch radial nach außen verlagert, wobei eine Bewegungsrichtung des Stoffgemischs schematisch durch den Pfeil 32 dargestellt ist. Hierdurch wird gemäß dem Funktionsprinzip bekannter Tellerseparatoren eine Abscheidung des Stoffs aus dem Stoffgemisch bewirkt. Der abgeschiedene Stoff verlässt vorzugsweise durch einen ersten Austritt 57 des Gehäuses 39 entlang einer schematisch mittels eines Pfeils 59 dargestellten Fließrichtung den Tellerseparator 1. Ein um den Stoff bereinigtes Stoffgemisch verlässt vorzugsweise über einen zweiten Austritt 61 des Gehäuses 39 entlang einer schematisch durch die Pfeile 63, 63' gekennzeichneten Fließrichtung den Tellerseparator 1.

Insgesamt zeigt sich, dass durch die erfindungsgemäße Ausgestaltung des Tellerseparators ein insbesondere für dessen Einbau erforderlicher Bauraum im Vergleich zu herkömmlichen Tellerseparatoren erheblich reduziert werden kann. Darüber hinaus kann eine Lagerung durch Reduktion von Lagerstellen vereinfacht werden, wodurch dessen Kosten reduziert werden.

## Patentansprüche

1. Tellerseparator (1) zum Abscheiden eines Stoffs aus einem Stoffgemisch, mit
- einer Abscheidereinrichtung (3) und einem Elektromotor (5) zum rotatorischen Antreiben der Abscheidereinrichtung (3), wobei
- die Abscheidereinrichtung (3) drehfest mit dem Elektromotor (5) gekoppelt ist, wobei
- der Elektromotor (5) als Außenläufer ausgestaltet ist und einen in radialer Richtung bezüglich einer Drehachse (7) des Elektromotors (5) innenliegenden Stator (9) und einen außenliegenden Rotor (11) aufweist, wobei
- die Abscheidereinrichtung (3) an dem Rotor (11) befestigt ist und sich ausgehend von dem Rotor (11) in radialer Richtung nach außen erstreckt, und wobei
- der Stator (9) in axialer Richtung bezüglich der Drehachse (7) gesehen wenigstens teilweise in Überdeckung mit der Abscheidereinrichtung (3) angeordnet ist.
**dadurch gekennzeichnet, dass**
- der Rotor (11) mittels einer Lagerwelle (33), welche den Stator (9) zumindest teilweise in axialer Richtung durchgreift, drehbar gelagert ist, wobei der Rotor (11) mit der Lagerwelle (33) über einen Verbindungsabschnitt (34) fest verbunden ist.

2. Tellerseparator (1) nach Anspruch 1, **dadurch gekennzeichnet, dass** die Abscheidereinrichtung (3) mehrere koaxial zueinander angeordnete Tellerelemente (17) aufweist.

3. Tellerseparator (1) nach Anspruch 2, **dadurch gekennzeichnet, dass** die mehreren Tellerelemente (17) jeweils ringförmig ausgebildet sind, wobei diese jeweils ein in radialer Richtung innenliegendes erstes Ende (19) und ein in radialer Richtung außenliegendes zweites Ende (21) aufweisen, und wobei die mehreren Tellerelemente (17) jeweils an dem ersten Ende (19) an dem Rotor (11) drehfest angeordnet sind.

4. Tellerseparator (1) nach Anspruch 3, **dadurch gekennzeichnet, dass** das erste Ende (19) zumindest eines der mehreren Tellerelemente (17) innerhalb eines Bereichs (23) der Drehachse (7), über welchen sich der Stator (9) axial erstreckt, in Querrichtung zu der Drehachse (7) angeordnet ist.

5. Tellerseparator (1) nach Anspruch 3 oder 4, **dadurch gekennzeichnet, dass** die mehreren Tellerelemente (17) jeweils einen ersten Ringbereich (25) aufweisen, der sich ausgehend von dem ersten Ende (19) radial in Richtung des zweiten Endes (21) erstreckt, wobei die mehreren Tellerelemente (17) in dem ersten Ringbereich (25) im Wesentlichen eben ausgebildet und senkrecht zu der Drehachse (7) angeordnet sind.

6. Tellerseparator (1) nach Anspruch 5, **dadurch gekennzeichnet, dass** das Stoffgemisch den mehreren Tellerelementen (17) im Bereich des ersten Ringbereichs (25) zuführbar ist.

7. Tellerseparator (1) nach Anspruch 5 oder 6, **dadurch gekennzeichnet, dass** die mehreren Tellerelemente (17) jeweils einen zweiten Ringbereich (31) aufweisen, der sich jeweils an den ersten Ringbereich (25) anschließt und sich bis zu dem zweiten Ende (21) erstreckt, wobei die mehreren Tellerelemente (17) in dem zweiten Ringbereich (31) im Wesentlichen kegelabschnittsförmig ausgebildet sind und mit der Drehachse (7) einen Winkel von kleiner als 90° und größer als 0° einschließen.

8. Tellerseparator (1) nach einem der Ansprüche 2 bis 7, **dadurch gekennzeichnet, dass** die mehreren Tellerelemente (17) mit dem Rotor (11) einstückig ausgebildet sind.

9. Tellerseparator (1) nach einem der vorhergehenden Ansprüche, **gekennzeichnet durch** ein Gehäuse (39), welches mit dem Stator (9) fest verbunden ist.

## Claims

1. Plate separator (1) for separating a substance from a substance mixture, having
- a separator apparatus (3) and an electric motor (5) for rotationally driving the separator apparatus (3), wherein
- the separator apparatus (3) is coupled for conjoint rotation with the electric motor (5), wherein
- the electric motor (5) is designed as an external rotor and has an inner stator (9) and an outer rotor (11) in the radial direction with respect to an axis of rotation (7) of the electric motor (5), wherein
- the separator apparatus (3) is fastened to the rotor (11) and extends outwards from the rotor (11) in the radial direction, and wherein
- the stator (9) is arranged, as viewed in the axial direction with respect to the axis of rotation (7), at least partially overlapping with the separator apparatus (3),
**characterised in that**
- the rotor (11) is mounted rotatably means of a bearing shaft (33) which engages through the stator (9) at least partially in the axial direction, wherein the rotor (11) is fixedly connected to the bearing shaft (33) via a connecting section (34).

2. Plate separator (1) according to claim 1, **characterised in that** the separator apparatus (3) has a plurality of plate elements (17) arranged coaxially with respect to one another.

3. Plate separator (1) according to claim 2, **characterised in that** the plurality of plate elements (17) each have an annular form, wherein they each have an inner first end (19) in the radial direction and an outer second end (21) in the radial direction, and wherein the plurality of plate elements (17) are each arranged for conjoint rotation on the rotor (11) at the first end (19).

4. Plate separator (1) according to claim 3, **characterised in that** the first end (19) of at least one of the plurality of plate elements (17) is arranged within a scope (23) of the axis of rotation (7) over which the stator (9) extends axially, in a direction transverse to the axis of rotation (7).

5. Plate separator (1) according to claim 3 or 4, **characterised in that** the plurality of plate elements (17) each have a first annular region (25) which extends from the first end (19) radially in the direction of the second end (21), wherein the plurality of plate elements (17) are substantially flat in the first annular region (25) and are arranged perpendicular to the axis of rotation (7).

6. Plate separator (1) according to claim 5, **characterised in that** the substance mixture can be fed to the plurality of plate elements (17) in the scope of the first annular region (25).

7. Plate separator (1) according to claim 5 or 6, **characterised in that** the plurality of plate elements (17) each have a second annular region (31) which respectively adjoins the first annular region (25) and extends up to the second end (21), wherein the plurality of plate elements (17) have substantially the form of a conical section in the second annular region (31) and include an angle of less than 90° and greater than 0° with the axis of rotation (7).

8. Plate separator (1) according to any of claims 2 to 7, **characterised in that** the plurality of plate elements (17) are formed in one piece with the rotor (11).

9. Plate separator (1) according to any of the preceding claims, **characterised by** a housing (39) which is fixedly connected to the stator (9).

## Revendications

1. Séparateur à disques (1) pour séparer une substance d'un mélange de substances, avec
- un dispositif de séparation (3) et un moteur électrique (5) pour entraîner en rotation le dispositif de séparation (3), dans lequel
- le dispositif de séparation (3) est couplé de manière solidaire en rotation au moteur électrique (5), dans lequel
- le moteur électrique (5) est réalisé sous la forme d'un induit externe et présentant un stator (9) situé à l'intérieur dans une direction radiale par référence à un axe de rotation (7) du moteur électrique (5) et un rotor externe (11), dans lequel
- le dispositif de séparation (3) est fixé au rotor (11) et s'étend dans une direction radiale vers l'extérieur à partir du rotor (11), et dans lequel
- le stator (9), vu dans la direction axiale par référence à l'axe de rotation (7), est agencé au moins partiellement en chevauchement avec le dispositif de séparation (3),
**caractérisé en ce que**
- le rotor (11) est monté rotatif au moyen d'un arbre de palier (33) qui traverse au moins partiellement le stator (9) dans une direction axiale, dans lequel le rotor (11) est relié de manière fixe à l'arbre de palier (33) par l'intermédiaire d'une section de liaison (34).

2. Séparateur à disques (1) selon la revendication 1, **caractérisé en ce que** le dispositif de séparation (3) présente plusieurs éléments de disque (17) disposés coaxialement les uns par rapport aux autres.

3. Séparateur à disques (1) selon la revendication 2, **caractérisé en ce que** les plusieurs éléments de disque (17) sont réalisés chacun en forme d'anneau, dans lequel ceux-ci présentent chacun une première extrémité (19) située du côté intérieur dans une direction radiale et une seconde extrémité (21) située du côté extérieur dans une direction radiale, et dans lequel les plusieurs éléments de disque (17) sont agencés chacun sur le rotor (11) de manière solidaire en rotation au niveau de la première extrémité (19).

4. Séparateur à disques (1) selon la revendication 3, **caractérisé en ce que** la première extrémité (19) d'au moins un des plusieurs éléments de disque (17) est disposée dans une zone (23) de l'axe de rotation (7) sur laquelle le stator (9) s'étend axialement, dans une direction transversale par rapport à l'axe de rotation (7).

5. Séparateur à disques (1) selon la revendication 3 ou 4, **caractérisé en ce que** les plusieurs éléments de disque (17) présentent chacun une première zone annulaire (25), qui s'étend radialement en direction de la seconde extrémité (21) à partir de la première extrémité (19), dans lequel les plusieurs éléments de disque (17) sont réalisés sensiblement plans dans la première zone annulaire (25) et disposés perpendiculairement par rapport à l'axe de rotation (7).

6. Séparateur à disques (1) selon la revendication 5, **caractérisé en ce que** le mélange de substances peut être amené aux plusieurs éléments de disque (17) dans la zone de la première zone annulaire (25).

7. Séparateur à disques (1) selon la revendication 5 ou 6, **caractérisé en ce que** les plusieurs éléments de disque (17) présentent chacun une seconde zone annulaire (31) qui est adjacente respectivement à la première zone annulaire (25) et s'étend jusqu'à la seconde extrémité (21), dans lequel les plusieurs éléments de disque (17) dans la seconde zone annulaire (31) sont réalisés essentiellement en forme de segment de cône et forment un angle inférieur à 90° et supérieur à 0° avec l'axe de rotation (7).

8. Séparateur à disques (1) selon l'une quelconque des revendications 2 à 7, **caractérisé en ce que** les plusieurs éléments de disque (17) sont réalisés d'une seule pièce avec le rotor (11).

9. Séparateur à disques (1) selon l'une quelconque des revendications précédentes, **caractérisé par** un boîtier (39), qui est relié de manière fixe au stator (9).
